# EUROPÄISCHE PATENTSCHRIFT

(11) **EP 3 715 155 B1**
(45) Veröffentlichungstag und Bekanntmachung des Hinweises auf die Patenterteilung: **09.03.2022**
(21) Anmeldenummer: 20153968.1
(22) Anmeldetag: 28.01.2020
(51) Int. Cl.: B60G 11/27, B60G 17/019, F16F 9/32, F16F 9/04

(54) **LUFTFEDER**
PNEUMATIC SPRING
RESSORT PNEUMATIQUE

(30) Priorität: 26.03.2019 DE 102019204145
(43) Veröffentlichungstag der Anmeldung: 30.09.2020
(73) Patentinhaber: ContiTech Luftfedersysteme GmbH, 30165 Hannover (DE)
(72) Erfinder: Mosich, Manuel - c/o Continental AG, 30419 Hannover (DE)
(74) Vertreter: Continental Corporation

(56) Entgegenhaltungen:
- WO-A1-2006/127073
- DE-A1- 3 446 411
- DE-A1-102008 021 043
- GB-A- 2 177 475
- JP-A- H08 216 880
- US-A1- 2010 207 308

## Beschreibung

Die Erfindung betrifft eine Luftfeder, beispielsweise für ein Kraftfahrzeug, mit einem weitgehend schlauchförmigen Luftfederbalg, welcher aus einem faserarmierten elastomeren Kunststoff besteht und einfaltig, mehrfaltig oder ungefaltet ausgebildet ist, wobei ein erstes axiales Ende des Luftfederbalgs an einer ersten Endplatte sowie ein zweites axiales Ende des Luftfederbalgs an einer zweiten Endplatte befestigt ist, wobei der Luftfederbalg und die beiden Endplatten rotationssymmetrisch zu einer Längsmittelachse ausgebildet sind sowie einen Innenraum druckdicht umgrenzen, und mit einer an der Luftfeder integrierten elektronischen Sensorik.

Luftfedern kommen bei Schienenfahrzeugen, Wasserfahrzeugen, Lastkraftwagen sowie Personenkraftwagen zum Einsatz, da aufgrund der fehlenden Eigendämpfung ein sensibles Ansprechverhalten mit einem hohen Federungskomfort realisierbar ist. Darüber hinaus kann mittels einer Luftfederung eine Fahrzeughöhe belastungsabhängig eingestellt werden, wobei im Fall von höheren Lasten das Federungsverhalten härter wird. Mittels einer flexibel einstellbaren Luftfederung kann außerdem die Fahrzeughöhe an ein vorgegebenes Niveau einer Ladekante, an eine maximale Unterfahrhöhe eines Bauwerks wie einer Brücke oder dergleichen angepasst werden.

Zudem sind Luftfedern in höhenverstellbaren Fahrzeugsitzen, pneumatischen Hebevorrichtungen oder als Schwingungsisolatoren im Maschinenbau anzutreffen. Luftfedern weisen einen in der Regel faserarmierten, flexiblen sowie einfaltigen oder mehrfaltigen Federbalg auf, dessen axiale Enden jeweils mit einer Endplatte zur Bildung und Umgrenzung eines druckdichten Innenraumes der Luftfedern verbunden sind. Zur möglichst präzisen Einstellung von gewünschten physikalischen Eigenschaften einer Luftfeder im Betrieb, insbesondere einer axialen Höhe und/oder der Federhärte, ist eine Sensorik im Innenraum des Luftfederbalgs erforderlich.

Aus der EP 0 938 999 A2 ist eine Luftfeder mit einer Vorrichtung zur vollautomatischen Gewichtseinstellung und Höhenmessung eines komfortabel gefederten Personensitzes beziehungsweise eines Fahrzeugrades bekannt. Die Vorrichtung weist einem elektropneumatischen Servoblock auf, der direkt in den Kolben der Luftfeder eingebaut ist. Innerhalb des elektropneumatischen Servoblocks befindet sich ein entsperrbares Rückschlagventil, das den Innenraum der Luftfeder im Bedarfsfall hermetisch abdichtet. Die Einstellung der Luftfeder auf das einwirkende Gewicht erfolgt mithilfe eines Drucksensors. Die Einstellung der jeweils ergonomisch richtigen Sitzhöhe wird mit Hilfe von bevorzugt kontaktlosen Höhensensoren (zum Beispiel Ultraschall-, Infrarot-, Laserabstands- oder Radarsensor) erreicht. Durch die direkte Integration des elektro-pneumatischen Servoblocks in den Kolben der Luftfeder, mit einem Druck- und Wegsensor, ist eine kompakte Einheit geschaffen. Die betriebsnotwendige Druckluftleitung und die erforderlichen elektrischen Kabel für die elektronische Sensorik im Innenraum der Luftfeder sind über zwei baulich getrennte Durchführungen im Deckel des Kolbens in den Innenraum der Luftfeder geführt.

Die US 2010/207308 offenbart eine Luftfeder nach dem Oberbegriff des Anspruchs 1. Die DE 10 2008 021043 offenbart eine andere Luftfeder.

Der Erfindung lag die Aufgabe zugrunde, eine Luftfeder mit einer konstruktiv einfach realisierbaren und kostengünstig herstellbaren Schnittstelleneinheit für die betriebsnotwendige Druckluft und den elektrischen Anschluss der im Innenraum der Luftfeder vorzusehenden elektronischen Sensorik bereitzustellen, wobei eine Beeinflussung des mindestens einen Sensors durch strömende Druckluft zumindest weitgehend vermieden wird. Zudem sollen mit dieser Schnittstelleneinheit unterschiedliche Arten und Bauformen von Luftfedern ohne größere Umbauten ausrüstbar sein.

Die Lösung dieser Aufgabe wird mit einer Luftfeder erreicht, welche die Merkmale des Anspruchs 1 aufweist. Vorteilhafte Weiterbildungen sind in den abhängigen Ansprüchen definiert.

Die Erfindung betrifft demnach eine Luftfeder, beispielsweise für ein Kraftfahrzeug, mit einem weitgehend schlauchförmigen Luftfederbalg, welcher aus einem faserarmierten elastomeren Kunststoff besteht und einfaltig, mehrfaltig oder ungefaltet ausgebildet ist, wobei ein erstes axiales Ende des Luftfederbalgs an einer ersten Endplatte sowie ein zweites axiales Ende des Luftfederbalgs an einer zweiten Endplatte befestigt ist, wobei der Luftfederbalg und die beiden Endplatten rotationssymmetrisch zu einer Längsmittelachse ausgebildet sind sowie einen Innenraum druckdicht umgrenzen, und mit einer an der Luftfeder integrierten elektronischen Sensorik.

Bei dieser Luftfeder ist vorgesehen, dass eine Endplatte mit einer diese druckdicht durchdringenden Schnittstelleneinheit verbunden ist, dass die Schnittstelleneinheit Mittel zum Anschluss einer Druckluftleitung zur Durchleitung von Druckluft in und/oder aus dem Innenraum aufweist, und dass die Schnittstelleneinheit Mittel zur Aufnahme mindestens einer elektrischen und/oder einer optischen Leitung sowie Mittel zum Anschluss mindestens eines mit dem Innenraum der Luftfeder in einer physikalischen Wirkverbindung stehenden Sensors aufweist.

Durch diese Konstruktion ist nur eine Durchführung durch eine Endplatte einer Luftfeder erforderlich, wobei diese endplattenseitige Durchführung die Schnittstelleneinheit beispielsweise auswechselbar aufnimmt. Die Schnittstelleneinheit selbst weist wenigstens eine Durchführung für Druckluft und eine Durchführung für eine zu einem innenraumseitig angeordneten Sensor führenden Sensorleitung auf. Hieraus werden Herstellkosten eingespart sowie der notwendige Einbauraum verringert. Die erforderliche Druckdichtigkeit der Schnittstelleneinheit kann im einfachsten Fall beispielsweise durch das Vergießen der betreffenden Leitungsdurchführungen in der Schnittstelleneinheit mittels Kunststoff als Vergussmasse erfolgen. Alternativ dazu kann mindestens eine Leitung mittels einer geeigneten Verbindung, einer Steckverbindung, einer Steckkupplung oder ähnlich an die Schnittstelleneinheit fluidisch, elektrisch und/oder optisch angebunden sein.

Gemäß einer technisch vorteilhaften Ausgestaltung ist vorgesehen, dass der mindestens eine Sensor an der Innenraumseite der Schnittstelleneinheit angeordnet ist. Hierdurch ergibt sich ein besonders kompakter und platzsparender Aufbau der betriebsnotwendigen Sensorik einer zum Beispiel mit Druck-, Temperatur-, Feuchtigkeits- und/oder Wegemesssensoren ausgestatteten Luftfeder. Längere Verkabelungswege werden dadurch vermieden.

Nach der Erfindung ist die Schnittstelleneinheit als eine Einschraubeinheit ausgebildet, welche in eine in einer der Endplatten ausgebildete Gewindebuchse einschraubbar ist. Hierdurch ist eine schnelle Montage und gegebenenfalls Demontage der Schnittstelleneinheit an einer Endplatte einer Luftfeder gewährleistet. Darüber hinaus ist ein mechanisch zuverlässiger Sitz der Schnittstelleneinheit in der Endplatte der Luftfeder mit der Gewindebuchse erreicht. Ferner lassen sich bereits verbaute Luftfedern, die über eine deckelseitige Gewindebuchse für den betriebsnotwendigen Druckluftanschluss verfügen, leicht und kostengünstig mit einer zur Druckmessung und Wegmessung erforderlichen elektronischen Sensorik nachrüsten.

Vorzugsweise ist die Einschraubeinheit mittels eines Dichtmittels gegen die Gewindebuchse abgedichtet. Infolgedessen wird ein Druckverlust im Innenraum der Luftfeder vermieden. Zur Abdichtung kann zum Beispiel konventionelles Teflon^{®}-Band, Curil^{®}, Dichtungshanf oder ähnliches Verwendung finden.

Weiter kann vorgesehen sein, dass die Einschraubeinheit aus einem Kunststoff oder aus einem faserarmierten Kunststoff besteht. Infolgedessen sind ein geringes Gewicht, eine ausgezeichnete Korrosionsbeständigkeit, eine gute Abdichtungswirkung sowie eine hohe mechanische Belastbarkeit der Einschraubeinheit realisiert.

Die Gewindebuchse ist vorzugsweise stoffschlüssig und/oder formschlüssig in einer der Endplatten der Luftfeder befestigt. Hierdurch ist ein unbeabsichtigtes Lösen der Gewindebuchse ausgeschlossen. Darüber hinaus ist eine hermetische Abdichtung zwischen der Gewindebuchse und der zugeordneten Endplatte der Luftfeder gewährleistet. Die Gewindebuchse kann zum Beispiel in eine der Endplatten der Luftfeder eingeschweißt, eingeschraubt, eingepresst und/oder mit dieser verklebt sein. Die Endplatten der Luftfeder bestehen vorzugsweise aus einem metallischen Material. Sie können alternativ dazu aber auch aus einem faserverstärkten Kunststoff gefertigt sein. Dasselbe gilt für die in einer der Endplatten befestigte Gewindebuchse.

Nach der Erfindung weist die Einschraubeinheit mindestens einen koaxial oder parallel zur Längsmittelachse der Luftfeder ausgerichteten Kanal oder Kanalabschnitt zur Durchleitung von Druckluft in oder aus dem Innenraum der Luftfeder auf. Hierdurch ist eine Beeinflussung des mindestens einen Sensors durch einströmende oder ausströmende Druckluft weitestgehend ausgeschlossen.

Eine andere günstige Weiterbildung der Luftfeder sieht vor, dass an einem in den Innenraum gerichteten freien Ende der Einschraubeinheit eine elektronische Leiterplatte befestigt ist, und dass an der elektronischen Leiterplatte der mindestens eine Sensor und/oder eine dem mindestens einen Sensor zugeordnete Elektronikeinheit angeordnet ist. Infolgedessen ist zusätzlich zu dem mindestens einen Sensor eine komplexe analoge und/oder digitale Elektronikeinheit zur Aufbereitung oder elektronischen Vorverarbeitung von Sensordaten in den Innenraum der Luftfeder integriert.

In Weiterbildung der gerade genannten Konstruktion kann vorgesehen sein, dass die Einschraubeinheit innenraumseitig eine Abdeckung aufweist, welche den mindestens einen Sensor bis auf eine weitgehend koaxial oder parallel zur Längsmittelachse verlaufende Messrichtung gegen in die Luftfeder einströmende oder aus dieser ausströmende Druckluft weitgehend abschirmt. Hierdurch wird die Gefahr eine Beeinflussung des Sensors beziehungsweise der ganzen Sensorik durch in den Innenraum der Luftfeder ein- oder ausströmende Druckluft weiter minimiert.

Hinsichtlich des erwähnten koaxial oder parallel zur Längsmittelachse der Luftfeder verlaufenden Kanals oder Kanalabschnitts in der Einschraubeinheit ist es nach der Erfindung vorgesehen, dass dieser innerhalb der Einschraubeinheit an seinem innenraumseitigen Ende mit einem zumindest weitgehend parallel zur Endplatte verlaufenden Kanalabschnitt verbunden ist, wobei letzterer radial in den Innenraum mündet. Infolge dieser Anordnung ist eine Beeinflussung des mindestens einen Sensors durch strömende Druckluft zumindest weitgehend vermieden.

Gemäß einer anderen Ausführungsvariante kann vorsehen sein, dass die Einschraubeinheit ausgehend von der vom Innenraum abgewandten Außenseite der Endplatte in die Gewindebuchse der Endplatte eingeschraubt ist. Infolgedessen ist eine gut zugängliche oberseitige Montage der vorzugsweise als Einschraubeinheit ausgebildeten Durchführeinheit gegeben.

Alternativ dazu kann vorgesehen sein, dass die Einschraubeinheit ausgehend von der dem Innenraum zugewandten Innenseite der Endplatte in die Gewindebuchse der Endplatte eingeschraubt ist. Hierdurch ist eine unterseitige Montageoption der vorzugsweise als Einschraubeinheit ausgeführten Durchführeinheit gegeben, sodass die Oberseite der ersten Endplatte einfacher an eine zu tragende Konstruktion anschließbar ist.

Eine andere vorteilhafte Weiterbildung der Luftfeder sieht vor, dass die Schnittstelleneinheit eine pneumatische Steckverbindungsvorrichtung für eine Druckluftleitung aufweist. Hierdurch lässt sich die Druckluftleitung einfach an die Luftfeder anschließen und gegebenenfalls wieder abtrennen.

Zudem weist die Schnittstelleneinheit vorzugsweise mindestens eine elektrische und/oder optische Steckverbindungvorrichtung für die mindestens eine elektrische und/oder optische Leitung auf. Hierdurch lässt sich der mindestens eine Sensor der Luftfeder beispielsweise zu Montage-, Wartungs- oder Reparaturzwecken von einer zugeordneten Steuer- und/oder Regelelektronik leicht abtrennen und wieder verbinden und/oder ersetzen.

Hinsichtlich der Einschraubeinheit ist bevorzugt vorgesehen, dass diese an ihrem innenraumseitigen freien Ende als rechteckige Endplatte ausgebildet ist. Diese Form des innenraumseitigen Endes der Einschraubeinheit lässt sich besonders kostengünstig herstellen und ermöglicht eine einfache Herstellung sowie Befestigung des genannten Abdeckungsbauteils zum Schutz der elektrischen Leiterplatte sowie der daran angeordneten Elektronikeinheit samt Sensor.

Zum besseren Verständnis der Erfindung ist der Beschreibung eine Zeichnung beigefügt, in der mehrere Ausführungsbeispiele dargestellt sind. Im Einzelnen zeigt die Zeichnung in
Fig. 1 eine schematische Längsschnittdarstellung einer bekannten Luftfeder,
Fig. 2 eine schematische Längsschnittdarstellung einer Luftfeder mit einem ersten Beispiel einer Schnittstelleneinheit,
Fig. 3 die Luftfeder gemäß Fig. 2 mit einem zweiten Beispiel einer Schn ittstelleneinheit,
Fig. 4 die Luftfeder gemäß Fig. 2 mit einem dritten Beispiel einer Schnittstelleneinheit, und
Fig. 5 die Luftfeder von Fig. 2 mit einer erfindungsgemäßen Ausführungsform einer Schnittstelleneinheit.

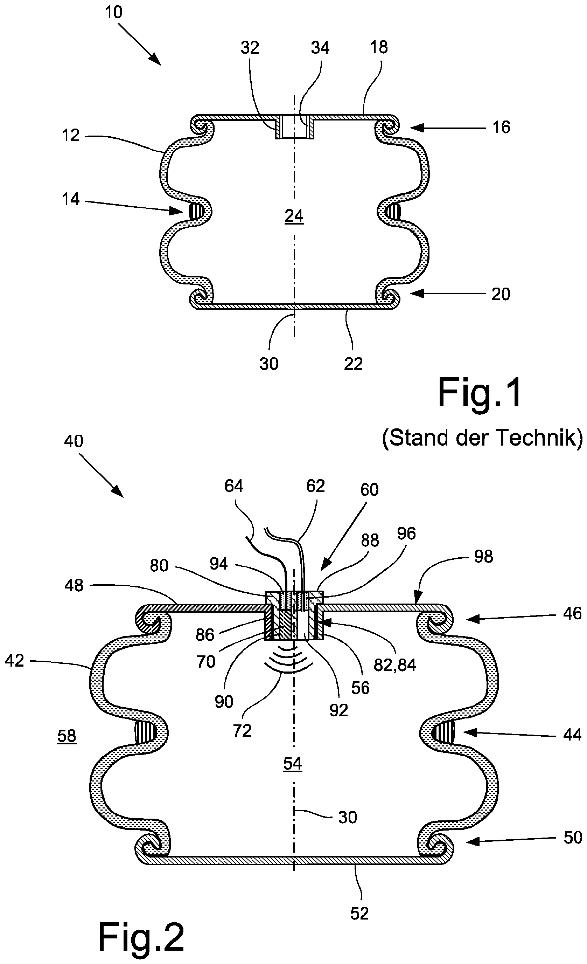

Die Fig. 1 zeigt demnach eine schematische Längsschnittdarstellung einer bekannten Luftfeder 10. Diese verfügt über einen schlauchartigen, hier lediglich exemplarisch einfach gefalteten Luftfederbalg 12, der aus einem bevorzugt faserarmierten elastomeren Kunststoff hergestellt ist. Abweichend von dem hier gezeigten einmal gefalteten Luftfederbalg 12 mit nur einer Einschnürzone 14 kann dieser auch im Wesentlichen glatt-hohlzylindrisch, das heißt ungefaltet oder mehrfachgefaltet ausgebildet sein. An einem ersten axialen Ende 16 des Luftfederbalgs 12 ist eine erste massive Endplatte 18 hermetisch dichtend befestigt. Dem entsprechend ist an einem zweiten axialen Ende 20 des Luftfederbalgs 12 eine zweite massive Endplatte 22 druckdicht befestigt, wodurch ein druckdichter Innenraum 24 der Luftfeder 10 gebildet ist. Die Luftfeder 10 ist rotationssymmetrisch zu deren Längsmittelachse 30 aufgebaut. Lediglich beispielhaft ist hier zentrisch in der ersten Endplatte 18 der Luftfeder 10 ein pneumatischer Anschluss 32 für eine nicht dargestellte Druckluftzuleitung ausgebildet. Eine außermittige Anordnung des Anschlusses 32 an der ersten Endplatte 18 ist gleichfalls möglich.

Der Anschluss 32 kann als eine integral an der ersten Endplatte 18 ausgebildete Gewindebuchse 34 mit einem Innengewinde ausgeführt sein. Alternativ dazu kann der Anschluss 32 für die Druckluftleitung auch in der zweiten Endplatte 22 der Luftfeder 10 ausgebildet sein. Der Anschluss 32 kann für den Fall, dass zumindest die erste Endplatte 18 aus einem metallischen Werkstoff gebildet ist, durch einen geeigneten Umformprozess, zum Beispiel durch Ziehen und anschließendes Schneiden des Innengewindes, hergestellt sein.

Die druckdichte Verbindung des Luftfederbalgs 12 mit den beiden in der Regel kreisrunden Endplatten 18, 22 kann jeweils, wie hier dargestellt, an dem umgebördelten radialen Rand der beiden Endplatten 18, 22 sowie mittels geeigneter Klemmelemente realisiert sein. Die Endplatten 18, 22 sind aus einem hinreichend festen metallischen Werkstoff und/oder aus einem eine hinreichende mechanische Belastbarkeit aufweisenden, erforderlichenfalls faserarmierten Kunststoff gebildet.

In das Innengewinde der Gewindebuchse 34 ist zum Beispiel ein rohrförmiger Anschlussstutzen beziehungsweise ein nicht dargestellter Schraubnippel einschraubbar, wobei die Druckluftleitung mit dem Anschlussstutzen oder dem Schraubnippel mit Hilfe geeigneter Befestigungsmittel druckdicht verbunden ist. Im Übrigen sind der konstruktive Aufbau sowie die Funktion der Luftfeder 10 einem auf dem Gebiet der pneumatischen Federungstechnik tätigen Fachmann hinreichend bekannt, sodass auf eine eingehendere Beschreibung verzichtet werden kann. Die Fig. 2 zeigt eine schematische Längsschnittdarstellung einer

Luftfeder 40 mit einer an dieser befestigten Schnittstelleneinheit 60. Die Luftfeder 40 weist einen angenähert hohlzylindrischen Luftfederbalg 42 aus einem faserarmierten elastomeren Kunststoff mit einer Einschnürzone 44 auf und ist rotationssymmetrisch zu dessen Längsmittelachse 30 aufgebaut. An einem ersten axialen Ende 46 des Luftfederbalgs 42 ist eine erste Endplatte 48 und an einem zweiten axialen Ende 50 des Luftfederbalgs 42 ist eine zweite Endplatte 52 zur Schaffung und Umgrenzung eines geschlossenen Innenraums 54 druckdicht befestigt.

Zentrisch in Bezug zur Längsmittelachse 30 ist an der ersten Endplatte 48 eine nach radial innen gerichtete, näherungsweise hohlzylindrische Gewindebuchse 56 angeordnet. Die Gewindebuchse 56 kann stoff- und/oder formschlüssig mit der ersten Endplatte 48 verbunden sein. Beispielsweise kann die Gewindebuchse 56 in die erste Endplatte 48 eingeschweißt, eingelötet, eingepresst, eingeschraubt, eingeklebt etc. sein. Alternativ dazu kann die Gewindebuchse 56 auch integral durch einen Umformprozess, insbesondere durch plastisches Ziehen und anschließendes Gewindeschneiden realisiert sein. Der druckdichte Innenraum 54 ist durch die beiden im Wesentlichen parallel zueinander angeordneten Endplatten 48, 52 sowie den Luftfederbalg 42 von der äußeren Umgebung 58 der Luftfeder 40 separiert.

Die erste Endplatte 48 weist eine integrierte sowie druckdichte Schnittstelleneinheit 60 für eine Druckluftleitung 62 zum Zu- oder Abführen von Druckluft in oder aus den Innenraum 54 sowie für mindestens eine elektrische und/oder optische Leitung 64 zum Anschluss mindestens eines mit dem Innenraum 54 in einer physikalischen Wirkverbindung stehenden Sensors 70 auf. Der mindestens eine Sensor 70 ist zur Minimierung der erforderlichen Leitungslängen wie in Fig. 2 dargestellt bevorzugt im Bereich der innenraumnahen Seite der Schnittstelleneinheit 60 positioniert. Bei dem mindestens einen Sensor 70 kann es sich beispielsweise um einen Druck-, Temperatur-, Luftfeuchte-, Wegmess-, Drehwinkel-, Endlagensensor oder dergleichen handeln. Der mindestens eine Sensor 70 weist eine bevorzugte Messrichtung 72, die hier lediglich exemplarisch im Wesentlichen parallel zur Längsmittelachse 30 orientiert ist und zur zweiten Endplatte 52 weist.

Die Schnittstelleneinheit 60 ist vorzugsweise als eine im Wesentlichen zylindrische Einschraubeinheit 80 mit einem Außengewinde 82 realisiert, mittels dem die Einschraubeinheit 80 in ein dazu geometrisch korrespondierend ausgebildetes Innengewinde 84 der Gewindebuchse 56 der ersten Endplatte 48 einschraubbar ist. Die Einschraubeinheit 80 ist bevorzugt mittels eines nicht im Detail darstellbaren Dichtmittels 86, wie zum Beispiel Teflon^{®}-Band, Dichthanf, Curil^{®} oder dergleichen, gegen die Gewindebuchse 56 abgedichtet. Die Einschraubeinheit 80 kann mit einem metallischen Werkstoff und/oder mit einem Kunststoff oder mit einem faserarmierten Kunststoff hergestellt sein. Um ein zu weites Einschrauben der Einschraubeinheit 80 in die Gewindebuchse 56 der ersten Endplatte 48 zu vermeiden, weist die Einschraubeinheit 80 an deren innenraumfernen Ende einen radial auswärts gerichteten kreisförmigen Kragen 88 auf, der eine Außenkontur zum Ansetzen eines Werkzeugs, wie etwa einen Schraubenschlüssel, aufweist. Bei fest an der Endplatte 48 anliegendem Kragen 88 stellt sich zudem eine zumindest geringfügige axiale Verspannung zwischen der Einschraubeinheit 80 und der Endplatte 48 ein, wodurch eine zuverlässige Sicherung der Einschraubeinheit 80 gegen ein unkontrolliertes Lösen an der Luftfeder 40 gewährleistet ist.

Die Einschraubeinheit 80 verfügt hier über eine erste axiale Durchgangsbohrung 90 und eine zweite axiale Durchgangsbohrung 92, die parallel zur Längsmittelachse 30 ausgerichtet sind. Die mindestens eine elektrische und/oder optische Leitung 64 ist zum Anschluss des mindestens einen Sensors 70 abschnittweise durch die erste axiale Durchgangsbohrung 90 hindurchgeführt und darin mittels einer geeigneten Dichtung 94 gegen die erste zylindrische Durchgangsbohrung 90 abgedichtet. Als Dichtung 94 kann im einfachsten Fall eine aushärtbare oder dauerelastische Vergussmasse aus einem geeigneten Kunststoff Anwendung finden. Außerdem können mittels einer nicht dargestellten Verschraubung radial deformierbare Elastomerelemente zur Fixierung und Abdichtung der elektrisch- und/oder optischen Leitung 64 vorgesehen sein. Entsprechend ist die Druckluftleitung 62 zumindest abschnittweise durch die zweite axiale Durchgangsbohrung 92 der Einschraubeinheit 80 geführt und gegenüber dieser mittels einer Dichtung 96 abgedichtet. Das Zuführen und das Abführen der betriebsnotwendigen Druckluft in den Innenraum 54 der Luftfeder 40 erfolgt mittels der in die zweite axiale zylindrische Durchgangsbohrung 92 einmündenden Druckluftleitung 62.

Die Einschraubeinheit 80 ist hier ausgehend von einer innenraumfernen Außenseite 98 der ersten Endplatte 48 in die Gewindebuchse 56 eingeschraubt. Die mindestens eine elektrische und/oder optische Leitung 64 und die Druckluftleitung 62 sind hier jeweils von der innenraumfernen Außenseite 98 der ersten Endplatte 48 weggerichtet und verlaufen dann außerhalb des Innenraumes 54 der Luftfeder 40.

Mittels der Schnittstelleneinheit 60, an welcher der Sensor 70 angeordnet ist, lässt sich eine vorhandene Luftfeder, etwa die Luftfeder 10 gemäß Fig. 1, mit einer entsprechenden Gewindebuchse in einer Endplatte problemlos mit einer komplexen Sensorik für zum Beispiel eine Weg- und/oder Druckmessung einfach und kostengünstig nachrüsten. Hierzu muss die Gewindebuchse lediglich über ein passendes Innengewinde verfügen.

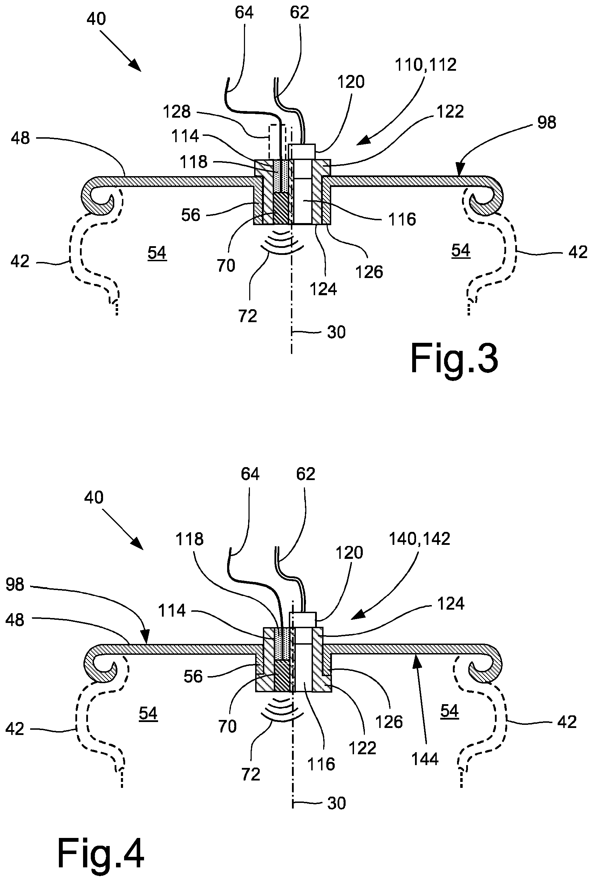

Die Fig. 3 zeigt den oberen Abschnitt der Luftfeder 40 gemäß Fig. 2, jedoch mit einem zweiten Beispiel einer Schnittstelleneinheit 110. Diese zur Längsmittelachse 30 rotationssymmetrische Luftfeder 40 weist demnach die erste Endplatte 48, die Gewindebuchse 56 sowie den nur angedeuteten Luftfederbalg 42 auf, wobei die zweite Endplatte 52 zum Abschluss des Innenraums 54 hier nicht dargestellt ist. Abweichend von dem Beispiel der Fig. 2 weist die erste Endplatte 48 der Luftfeder 40 eine etwas andere Schnittstelleneinheit 110 zur gleichzeitigen Anbindung der Druckluftleitung 62 und der elektrisch/optischen Leitung 64 auf. Diese Schnittstelleneinheit 110 ist ebenfalls als eine im Wesentlichen zylindrische Einschraubeinheit 112 ausgeführt, welche in die Gewindebuchse 56 der ersten Endplatte 48 der Luftfeder 40 druckdicht eingeschraubt ist. Die Einschraubeinheit 112 verfügt ferner über eine erste Durchgangsbohrung 114 und eine zweite axiale Durchgangsbohrung 116, welche parallel zur Längsmittelachse 30 der Luftfeder 40 ausgerichtet sind. In der ersten axialen Durchgangsbohrung 114 ist die elektrische und/oder optische Leitung 64 zum Anschluss des gleichfalls in der ersten axialen Durchgangsbohrung 114 angeordneten Sensors 70 geführt und mittels einer Dichtung 118 druckdicht gegen die Durchgangsbohrung 114 versiegelt. Die Dichtung 118 kann beispielsweise durch einem aushärtenden oder dauerelastischen Kunststoff gebildet sein.

Im Unterschied zu der Schnittstelleneinheit 60 gemäß Fig. 2 ist bei der Schnittstelleneinheit 110 gemäß Fig. 3 in die zweite axiale Durchgangsbohrung 116 eine bevorzugt im Bedarfsfall wieder lösbare beziehungsweise trennbare pneumatische Steckverbindung 120 zur Verbindung der Druckluftleitung 62 mit dem Innenraum 54 der Luftfeder 40 vorgesehen. Anstelle der lösbaren pneumatischen Steckverbindung 120 kann ein nicht dargestellter Einschraubstutzen beziehungsweise ein Einschraubnippel in die zweite Durchgangsbohrung 116 eingeschraubt sein, an dessen Stutzen beziehungsweise Nippel die Druckluftleitung 62 mittels geeigneter Befestigungsmittel druckdicht anschließbar ist. Ein radial auswärts gerichteter Kragen 122 der Einschraubeinheit 112 liegt wiederum mit einer zumindest geringfügigen axialen Vorspannung an der innenraumfernen Außenseite 98 der ersten Endplatte 48 der Luftfeder 40 an. Demnach ist auch diese Einschraubeinheit 112 von außen beziehungsweise von oben in die erste Endplatte 48 der Luftfeder 40 eingeschraubt. Ein vom radial auswärts gerichteten Kragen 122 abgewandter Endabschnitt 124 der Einschraubeinheit 112 schließt hier angenähert axial bündig mit einem freien, innenraumseitigen Endabschnitt 126 der Gewindebuchse 56 der ersten Endplatte 48 der Luftfeder 40 ab.

Zur Anbindung der mindestens einen elektrischen und/oder optischen Leitung 64 an den Sensor 70 kann auch eine im Bedarfsfall wieder lösbare elektrische und/oder optische Steckverbindung 128 vorgesehen sein, die hier lediglich mit einer mit einer Umrissdarstellung zeichnerisch angedeutet ist.

Die Fig. 4 zeigt die Luftfeder 40 gemäß Fig. 2 mit einem dritten Beispiel einer Schnittstelleneinheit 140. Diese zur der Längsmittelachse 30 rotationssymmetrisch ausgebildete Luftfeder 40 gemäß Fig. 2 weist wiederum die erste Endplatte 48, die Gewindebuchse 56 sowie den an der ersten Endplatte 48 druckdicht befestigten Luftfederbalg 42 auf, wobei die zweite Endplatte 52 zum Abschluss des Innenraums 54 hier ebenfalls nicht eingezeichnet ist.

Ein drittes Beispiel einer Schnittstelleneinheit 140 zum gleichzeitigen Anschluss der Druckluftleitung 62 und der mindestens einen elektrischen und/oder optischen Leitung 64 an die Luftfeder 40 ist konstruktiv im Wesentlichen identisch wie die Schnittstelleneinheit 110 gemäß Fig. 3 ausgebildet und weist daher ebenfalls die beiden axialen Durchgangsbohrungen 114, 116 auf. Innerhalb der ersten Durchgangsbohrung 114 sind der die bevorzugte Messrichtung 72 aufweisende Sensor 70 sowie die Dichtung 118 zur druckdichten Versiegelung der mindestens einen elektrischen und/oder optischen Leitung 64 zur Ankopplung des mindestens einen Sensors 70 eingebracht. Der pneumatische Anschluss der Druckluftleitung 62 erfolgt mittels der im Bedarfsfall wieder lösbaren pneumatischen Steckverbindung 120, die zumindest teilweise innerhalb der zweiten axialen Durchgangsbohrung 116 angeordnet ist.

Im Unterschied zu der Schnittstelleneinheit 110 gemäß Fig. 3 ist die als eine Einschraubeinheit 142 ausgebildete Schnittstelleneinheit 140 ausgehend von der innenraumseitigen Innenseite 144 der ersten Endplatte 48 in die Gewindebuchse 56 druckdicht eingeschraubt, sodass der radial auswärts gerichtete Kragen 122 am inneren Ende der Einschraubeinheit 142 mit einer zumindest geringfügigen axialen Vorspannung an dem in Richtung des Innenraumes 54 weisenden Endabschnitt 126 der Gewindebuchse 56 anliegt.

Die Einschraubeinheit 142 gemäß Fig. 4 ist im Vergleich zu den vorstehend erläuterten Beispiele spiegelverkehrt zu der ersten Endplatte 48 der Luftfeder 40 angeordnet und zu diesem Zweck ausgehend von der Innenseite 144 der Endplatte 48 in die Gewindebuchse 56 eingeschraubt. Infolgedessen ist die Dichtung 118 der mindestens einen elektrischen und/oder optischen Leitung 64 in der ersten Durchgangsbohrung 114 teilweise oberhalb der innenraumfernen Außenseite 98 der ersten Endplatte 48 positioniert. Die lösbare pneumatische Steckverbindung 120 befindet sich zumindest abschnittweise in der zweiten axialen Durchgangsbohrung 116 axial im Bereich des kragenfernen Endabschnitts 124 der Einschraubeinheit 142 und hierbei vollständig oberhalb der Außenseite 98 der ersten Endplatte 48.

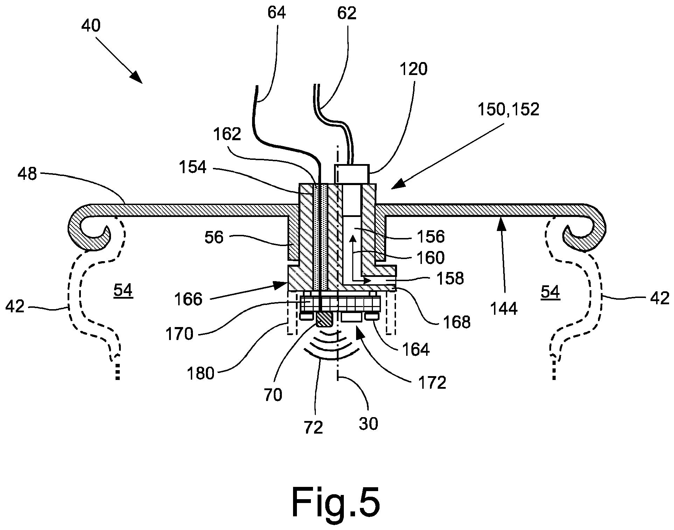

Die Fig. 5 zeigt die Luftfeder 40 gemäß Fig. 2 mit einer erfindungsgemäßen Ausführungsform einer Schnittstelleneinheit 150. Diese zur Längsmittelachse 30 rotationssymmetrische Luftfeder 40 weist daher ebenfalls die erste Endplatte 48 mit der hier integral ausgeformten Gewindebuchse 56 und den an der ersten Endplatte 48 druckdicht befestigten Luftfederbalg 42 auf, wobei die zweite Endplatte 52 zum Abschluss des Innenraums 54 nicht dargestellt ist.

Die Schnittstelleneinheit 150 zum gleichzeitigen Anschluss der Druckluftleitung 62 und der mindestens einen elektrischen und/oder optischen Leitung 64 ist als eine weitgehend zylindrische Einschraubeinheit 152 ausgebildet. Die Einschraubeinheit 152 ist analog zur Einschraubeinheit gemäß Fig. 4 von der Innenseite 144 der ersten Endplatte 48 in die Gewindebuchse 56 eingeschraubt.

Die Einschraubeinheit 152 weist abweichend von allen vorstehend beschriebenen Beispiele von Einschraubeinheiten eine zur Längsmittelachse 30 parallele Durchgangsbohrung 154 und eine abschnittsweise parallel verlaufende Bohrung 156 auf. Diese Bohrung 156 mündet in mindestens einen radial auswärts gerichteten Kanal 158, dessen freie Öffnung nach radial außen in Richtung zum Luftfederbalg 42 weist. Der mindestens eine radial auswärts gerichtete Kanal 158 ist, wie mit dem Doppelpfeil 160 angedeutet, demnach in fluidischer Verbindung mit dem Innenraum 54 der Luftfeder 40. Die mindestens eine elektrische und/oder optische Leitung 64 ist vollständig durch die axiale Durchgangsbohrung 154 hin durchgeführt und gegenüber dieser mit einer geeigneten Dichtung 162 aus einem zum Beispiel dauerelastischen oder aushärtbaren Kunststoff druckdicht versiegelt.

An dem innenraumseitigen freien Ende 166 der Einschraubeinheit 152 ist eine flanschartig rechteckige beziehungsweise scheibenartige Endplatte 168 ausgebildet, an der eine elektrische Leiterplatte 170 mit Hilfe von Befestigungselementen 164, wie zum Beispiel mindestens zwei Schrauben, Nieten, Klemmhaken oder dergleichen, befestigt ist. Die elektrische Leiterplatte 170 trägt den mindestens einen, die Messrichtung 72 aufweisenden Sensor 70, der mit der elektrischen und/oder optischen Leitung 64 verbunden ist. Darüber hinaus kann die elektrische Leiterplatte 170 eine analoge und/oder digitale Elektronikeinheit 172, insbesondere zur messtechnischen Vorverarbeitung und/oder numerischen Auswertung der von dem mindestens einen Sensor 70 gelieferten Messdaten aufweisen.

In der parallelen axialen Bohrung 156 ist die pneumatische Steckverbindung 120 zum Zuführen oder Abführen von Druckluft in beziehungsweise aus den Innenraum 54 der Luftfeder 40 druckdicht montiert. Aufgrund des radial auswärts gerichteten Kanals 158, der weitgehend parallel zwischen der Endplatte 168 und der elektrischen Leiterplatte 170 verläuft, ist eine Beeinflussung des die bevorzugte Messrichtung 72 aufweisenden Sensors 70 durch die mit dem Doppelpfeil 160 angedeutete, in den Innenraum 54 zugeführte oder abgeführte Druckluft weitgehend ausgeschlossen.

Zur weiteren Optimierung der messtechnischen Separation zwischen dem mindestens einen Sensor 70 und der in den Innenraum 54 der Luftfeder 40 zu- und abströmenden Druckluft kann eine hier lediglich exemplarisch näherungsweise hohlzylindrisch ausgebildete, manschettenförmige Abdeckung 180 an der Endplatte 168 der Einschraubeinheit 152 ausgebildet oder angeordnet sein. Die Abdeckung 180 umgreift radial zumindest den Sensor 70 umfangsseitig im Idealfall vollständig und ist in der Messrichtung 72 vorzugsweise vollflächig offen ausgestaltet. Die hohlzylindrische Abdeckung 180 ist hierbei von der Innenseite 144 der ersten Endplatte 48 weggerichtet und weist mit deren freien Ende in Richtung zur zweiten Endplatte 52 der Luftfeder 40. Die hohlzylindrische Abdeckung 180 kann aus demselben Werkstoff wie die Einschraubeinheit 152 bestehen und beispielsweise einstückig mit dieser ausgebildet sein.

### Bezugszeichenliste

- 10: Luftfeder (Stand der Technik)
- 12: Luftfederbalg
- 14: Einschnürzone des Luftfederbalgs
- 16: Erstes axiales Ende des Luftfederbalgs
- 18: Erste Endplatte der Luftfeder
- 20: Zweites axiales Ende des Luftfederbalgs
- 22: Zweite Endplatte der Luftfeder
- 24: Innenraum der Luftfeder
- 30: Längsmittelachse der Luftfeder
- 32: Anschluss
- 34: Gewindebuchse
- 40: Luftfeder
- 42: Luftfederbalg
- 44: Einschnürzone des Luftfederbalgs
- 46: Erstes axiales Ende des Luftfederbalgs
- 48: Erste Endplatte der Luftfeder 40
- 50: Zweites axiales Ende des Luftfederbalgs
- 52: Zweite Endplatte der Luftfeder 40
- 54: Innenraum der Luftfeder
- 56: Gewindebuchse an der Luftfeder
- 58: Äußere Umgebung
- 60: Schnittstelleneinheit
- 62: Druckluftleitung
- 64: Elektrische und/oder optische Leitung
- 70: Sensor
- 72: Messrichtung
- 80: Einschraubeinheit
- 82: Außengewinde
- 84: Innengewinde
- 86: Dichtmittel
- 88: Kragen der Einschraubeinheit
- 90: Erste axiale Durchgangsbohrung
- 92: Zweite axiale Durchgangsbohrung
- 94: Dichtung für eine elektrische und/oder optische Leitung
- 96: Dichtung für eine Druckluftleitung
- 98: Außenseite der Endplatte
- 110: Schnittstelleneinheit
- 112: Einschraubeinheit
- 114: Erste axiale Durchgangsbohrung in der Schnittstelleneinheit 112
- 116: Zweite axiale Durchgangsbohrung in der Schnittstelleneinheit 112
- 118: Dichtung für eine elektrische und/oder optische Leitung
- 120: Pneumatische Steckverbindungsvorrichtung
- 122: Kragen an der Schnittstelleneinheit 112
- 124: Endabschnitt der Einschraubeinheit 112
- 126: Endabschnitt der Gewindebuchse
- 128: Elektrische und/oder optische Steckverbindungvorrichtung
- 140: Schnittstelleneinheit
- 142: Einschraubeinheit
- 144: Innenseite der Endplatte
- 150: Schnittstelleneinheit
- 152: Einschraubeinheit
- 154: Axiale Durchgangsbohrung in der Schnittstelleneinheit 152
- 156: Koaxialer oder paralleler Kanalabschnitt in der Schnittstelleneinheit 152
- 158: Radialer Kanalabschnitt in der Schnittstelleneinheit 152
- 160: Strömungsrichtung von Druckluft
- 162: Dichtung für eine elektrisch und/oder optische Leitung
- 164: Befestigungselemente
- 166: Freies Ende der Einschraubeinheit 152
- 168: Endplatte der Einschraubeinheit 152
- 170: Elektrische Leiterplatte
- 172: Elektronikeinheit
- 180: Hohlzylindrische Abdeckung an der Schnittstelleneinheit 152

## Patentansprüche

1. Luftfeder (40), beispielsweise für ein Kraftfahrzeug, mit einem weitgehend schlauchförmigen Luftfederbalg (42), welcher aus einem faserarmierten elastomeren Kunststoff besteht und einfaltig, mehrfaltig oder ungefaltet ausgebildet ist, wobei ein erstes axiales Ende (46) des Luftfederbalgs (42) an einer ersten Endplatte (48) sowie ein zweites axiales Ende (50) des Luftfederbalgs (42) an einer zweiten Endplatte (52) befestigt ist, wobei der Luftfederbalg (42) und die beiden Endplatten (48, 52) rotationssymmetrisch zu einer Längsmittelachse (30) ausgebildet sind sowie einen Innenraum (54) druckdicht umgrenzen, und mit einer an der Luftfeder integrierten elektronischen Sensorik, wobei eine Endplatte (48) mit einer diese druckdicht durchdringenden Schnittstelleneinheit (60, 110, 140, 150) verbunden ist, dass die Schnittstelleneinheit (60, 110, 140, 150) Mittel zum Anschluss einer Druckluftleitung (62) zur Durchleitung von Druckluft in und/oder aus dem Innenraum (54) aufweist, und dass die Schnittstelleneinheit (60, 110, 140, 150) Mittel zur Aufnahme mindestens einer elektrischen und/oder einer optischen Leitung (64) sowie Mittel zum Anschluss mindestens eines mit dem Innenraum (54) der Luftfeder in einer physikalischen Wirkverbindung stehenden Sensors (70) aufweist,
**dadurch gekennzeichnet, dass**
die Schnittstelleneinheit (60, 110, 140, 150) als eine Einschraubeinheit (80, 112, 142, 152) ausgebildet ist, welche in eine in einer der Endplatten (48, 52) ausgebildete Gewindebuchse (56) einschraubbar ist,
wobei die Einschraubeinheit (152) mindestens einen koaxial oder parallel zur Längsmittelachse (30) der Luftfeder (40) ausgerichteten Kanal (156) oder Kanalabschnitt zur Durchleitung von Druckluft aufweist,
wobei derkoaxial oder parallel zur Längsmittelachse (30) der Luftfeder (40) verlaufende Kanal (156) oder Kanalabschnitt innerhalb der Einschraubeinheit (152) an seinem innenraumseitigen Ende mit einem zumindest weitgehend parallel zur Endplatte (48) verlaufenden Kanalabschnitt (158) verbunden ist, wobei letzterer radial in den Innenraum (54) mündet.

2. Luftfeder nach Anspruch 1, **dadurch gekennzeichnet, dass** der mindestens eine Sensor (70) an der Innenraumseite der Schnittstelleneinheit (60, 110, 140, 150) angeordnet ist.

3. Luftfeder nach Anspruch 1, **dadurch gekennzeichnet, dass** die Einschraubeinheit (80, 112, 142, 152) mittels eines Dichtmittels (86) gegen die Gewindebuchse (56) abgedichtet ist.

4. Luftfeder nach Anspruch 1 oder 3, **dadurch gekennzeichnet, dass** die Einschraubeinheit (80, 112, 142, 152) aus einem Kunststoff oder einem faserarmierten Kunststoff besteht.

5. Luftfeder nach einem Ansprüche 1 bis 4, **dadurch gekennzeichnet, dass** die Gewindebuchse (56) stoffschlüssig und/oder formschlüssig in einer der Endplatten (48, 52) der Luftfeder (40) befestigt ist.

6. Luftfeder nach Anspruch 1, **dadurch gekennzeichnet, dass** an einem in den Innenraum (54) gerichteten freien Ende (166) der Einschraubeinheit (152) eine elektronische Leiterplatte (170) befestigt ist, und dass an der elektronischen Leiterplatte (170) der mindestens eine Sensor (70) und/oder eine dem mindestens einen Sensor (70) zugeordnete Elektronikeinheit (172) angeordnet ist.

7. Luftfeder nach Anspruch 1 oder 6, **dadurch gekennzeichnet, dass** die Einschraubeinheit (152) innenraumseitig eine Abdeckung (180) aufweist, welche den mindestens einen Sensor (70) bis auf eine weitgehend koaxial oder parallel zur Längsmittelachse (30) verlaufende Messrichtung (72) gegen in die Luftfeder (40) einströmende oder aus dieser ausströmende Druckluft weitgehend abschirmt.

8. Luftfeder nach einem der Ansprüche 1 bis 7, **dadurch gekennzeichnet, dass** die Einschraubeinheit (80, 112) ausgehend von der vom Innenraum (54) abgewandten Außenseite (98) der Endplatte (48) in die Gewindebuchse (56) der Endplatte (48) eingeschraubt ist.

9. Luftfeder nach einem der Ansprüche 1 bis 7, **dadurch gekennzeichnet, dass** die Einschraubeinheit (142, 152) ausgehend von der dem Innenraum (54) zugewandten Innenseite (144) der Endplatte (48) in die Gewindebuchse (56) der Endplatte (48) eingeschraubt ist.

10. Luftfeder nach einem der vorherigen Ansprüche, **dadurch gekennzeichnet, dass** die Schnittstelleneinheit (110, 140, 150) eine pneumatische Steckverbindungsvorrichtung (120) für eine Druckluftleitung (62) aufweist.

11. Luftfeder nach einem der vorherigen Ansprüche, **dadurch gekennzeichnet, dass** die Schnittstelleneinheit (110) mindestens eine elektrische und/oder optische Steckverbindungvorrichtung (128) für die mindestens eine elektrische und/oder optische Leitung (64) aufweist.

12. Luftfeder nach einem der vorherigen Ansprüche, **dadurch gekennzeichnet, dass** die Einschraubeinheit (152) an deren innenraumseitigen freien Ende (166) als rechteckige Endplatte (168) ausgebildet ist.

## Claims

1. Air spring (40), for example for a motor vehicle, with a largely tubular air spring bellows (42), which consists of a fibre-reinforced elastomeric plastic and is formed in a single-convoluted, multi-convoluted or unconvoluted manner, wherein a first axial end (46) of the air spring bellows (42) is fastened on a first end plate (48) and a second axial end (50) of the air spring bellows (42) is fastened on a second end plate (52), wherein the air spring bellows (42) and the two end plates (48, 52) are formed rotationally symmetrical in relation to a longitudinal centre axis (30) and enclose an interior space (54) in a pressure-tight manner, and with an electronic sensor system integrated on the air spring, wherein an end plate (48) is connected to an interface unit (60, 110, 140, 150) passing through it in a pressure-tight manner, wherein the interface unit (60, 110, 140, 150) has means for connecting a compressed-air line (62) for conducting compressed air into and/or out of the interior space (54), and wherein the interface unit (60, 110, 140, 150) has means for receiving at least one electrical and/or optical line (64) and also means for connecting at least one sensor (70) in physical operative connection with the interior space (54) of the air spring,
**characterized in that**
the interface unit (60, 110, 140, 150) is formed as a screw-in unit (80, 112, 142, 152), which can be screwed into a threaded bush (56) formed in one of the end plates (48, 52),
wherein the screw-in unit (152) has at least one channel (156) or channel portion for conducting compressed air that is aligned coaxially or parallel to the longitudinal centre axis (30) of the air spring (40),
wherein the channel (156) or channel portion running coaxially or parallel to the longitudinal centre axis (30) of the air spring (40) within the screw-in unit (152) is connected at its end on the interior space side to a channel portion (158) running at least largely parallel to the end plate (48), wherein said channel portion merges radially into the interior space (54).

2. Air spring according to Claim 1, **characterized in that** the at least one sensor (70) is arranged on the interior space side of the interface unit (60, 110, 140, 150).

3. Air spring according to Claim 1, **characterized in that** the screw-in unit (80, 112, 142, 152) is sealed off from the threaded bush (56) by means of a sealant (86) .

4. Air spring according to Claim 1 or 3, **characterized in that** the screw-in unit (80, 112, 142, 152) consists of a plastic or a fibre-reinforced plastic.

5. Air spring according to one of Claims 1 to 4, **characterized in that** the threaded bush (56) is fastened in one of the end plates (48, 52) of the air spring (40) in a material-bonding and/or form-fitting manner.

6. Air spring according to Claim 1, **characterized in that** an electronic circuit board (170) is fastened on a free end (166) of the screw-in unit (152) that is directed into the interior space (54), and **in that** the at least one sensor (70) and/or an electronics unit (172) assigned to the at least one sensor (70) is arranged on the electronic circuit board (170).

7. Air spring according to Claim 1 or 6, **characterized in that** the screw-in unit (152) has on the interior space side a covering (180) that largely shields the at least one sensor (70) from compressed air flowing into the air spring (40) or flowing out of it apart from a measuring direction (72) running largely coaxially or parallel to the longitudinal centre axis (30) .

8. Air spring according to one of Claims 1 to 7 **characterized in that** the screw-in unit (80, 112) is screwed into the threaded bush (56) of the end plate (48) from the outer side (98) of the end plate (48) that is facing away from the interior space (54).

9. Air spring according to one of Claims 1 to 7, **characterized in** the screw-in unit (142, 152) is screwed into the threaded bush (56) of the end plate (48) from the inner side (144) of the end plate (48) that is facing towards the interior space (54).

10. Air spring according to one of the preceding claims, **characterized in that** the interface unit (110, 140, 150) has a pneumatic plug-in connection device (120) for a compressed-air line (62).

11. Air spring according to one of the preceding claims, **characterized in that** the interface unit (110) has at least one electrical and/or optical plug-in connection device (128) for the at least one electrical and/or optical line (64).

12. Air spring according to one of the preceding claims, **characterized in that** the screw-in unit (152) is formed at its free end (166) on the interior space side as a rectangular end plate (168).

## Revendications

1. Ressort pneumatique (40), par exemple pour un véhicule automobile, comprenant un soufflet de ressort pneumatique (42) généralement tubulaire qui est composé d'une matière plastique élastomère armée de fibres et est réalisé à un pli, à plusieurs plis ou sans pli, une première extrémité axiale (46) du soufflet de ressort pneumatique (42) étant fixée à une première plaque d'extrémité (48) et une deuxième extrémité axiale (50) du soufflet de ressort pneumatique (42) étant fixée à une deuxième plaque d'extrémité (52), le soufflet de ressort pneumatique (42) et les deux plaques d'extrémité (48, 52) étant réalisés en symétrie de révolution par rapport à un axe central longitudinal (30) et délimitant de manière étanche à la pression un espace intérieur (54), et comprenant un système de capteurs électronique intégré au niveau du ressort pneumatique, une plaque d'extrémité (48) étant reliée à une unité d'interface (60, 110, 140, 150) traversant celle-ci de manière étanche à la pression, l'unité d'interface (60, 110, 140, 150) présentant des moyens pour raccorder une conduite d'air comprimé (62) pour faire passer de l'air comprimé dans et/ou hors de l'espace intérieur (54), et l'unité d'interface (60, 110, 140, 150) présentant des moyens pour recevoir au moins une ligne électrique et/ou optique (64) ainsi que des moyens pour raccorder au moins un capteur (70) en relation active physique avec l'espace intérieur (54) du ressort pneumatique,
**caractérisé en ce que** l'unité d'interface (60, 110, 140, 150) est réalisée sous la forme d'une unité à visser (80, 112, 142, 152) qui peut être vissée dans une douille taraudée (56) réalisée dans l'une des plaques d'extrémité (48, 52),
l'unité à visser (152) présentant au moins un canal (156) ou une section de canal, orienté(e) de manière coaxiale ou parallèle par rapport à l'axe central longitudinal (30) du ressort pneumatique (40), pour faire passer de l'air comprimé,
le canal (156) ou la section de canal s'étendant de manière coaxiale ou parallèle à l'axe central longitudinal (30) du ressort pneumatique (40) étant relié à l'intérieur de l'unité à visser (152) au niveau de son extrémité côté intérieur à une section de canal (158) s'étendant au moins généralement en parallèle à la plaque d'extrémité (48), ladite section débouchant radialement sur l'espace intérieur (54).

2. Ressort pneumatique selon la revendication 1, **caractérisé en ce que** ledit au moins un capteur (70) est disposé du côté espace intérieur de l'unité d'interface (60, 110, 140, 150).

3. Ressort pneumatique selon la revendication 1, **caractérisé en ce que** l'unité à visser (80, 112, 142, 152) est rendue étanche par rapport à la douille taraudée (56) à l'aide d'un moyen d'étanchéité (86).

4. Ressort pneumatique selon la revendication 1 ou 3, **caractérisé en ce que** l'unité à visser (80, 112, 142, 152) est composée d'une matière plastique ou d'une matière plastique armée de fibres.

5. Ressort pneumatique selon l'une quelconque des revendications 1 à 4, **caractérisé en ce que** la douille taraudée (56) est fixée par liaison de matière et/ou par complémentarité de forme dans l'une des plaques d'extrémité (48, 52) du ressort pneumatique (40).

6. Ressort pneumatique selon la revendication 1, **caractérisé en ce qu'**une carte de circuits imprimés électronique (170) est fixée à une extrémité libre (166) de l'unité à visser (152), dirigée vers l'espace intérieur (54), et **en ce que** ledit au moins un capteur (70) et/ou une unité électronique (172) associée audit au moins un capteur (70) sont disposés sur la carte de circuits imprimés électronique (170).

7. Ressort pneumatique selon la revendication 1 ou 6, **caractérisé en ce que** l'unité à visser (152) présente côté espace intérieur un recouvrement (180) qui protège généralement ledit au moins un capteur (70) par rapport à l'air comprimé entrant dans ou sortant du ressort pneumatique (40), mise à part une direction de mesure (72) s'étendant de manière généralement coaxiale ou parallèle à l'axe central longitudinal (30).

8. Ressort pneumatique selon l'une quelconque des revendications 1 à 7, **caractérisé en ce que** l'unité à visser (80, 112) est vissée dans la douille taraudée (56) de la plaque d'extrémité (48) en partant de la face extérieure (98), détournée de l'espace intérieur (54), de la plaque d'extrémité (48).

9. Ressort pneumatique selon l'une quelconque des revendications 1 à 7, **caractérisé en ce que** l'unité à visser (142, 152) est vissée dans la douille taraudée (56) de la plaque d'extrémité (48) en partant de la face intérieure (144), tournée vers l'espace intérieur (54), de la plaque d'extrémité (48).

10. Ressort pneumatique selon l'une quelconque des revendications précédentes, **caractérisé en ce que** l'unité d'interface (110, 140, 150) présente un dispositif de connexion enfichable pneumatique (120) pour une conduite d'air comprimé (62).

11. Ressort pneumatique selon l'une quelconque des revendications précédentes, **caractérisé en ce que** l'unité d'interface (110) présente au moins un dispositif de connexion enfichable électrique et/ou optique (128) pour ladite au moins une ligne électrique et/ou optique (64).

12. Ressort pneumatique selon l'une quelconque des revendications précédentes, **caractérisé en ce que** l'unité à visser (152) est réalisée à l'extrémité libre (166) de celle-ci côté espace intérieur sous la forme d'une plaque d'extrémité (168) rectangulaire.
